Europäisches Patentamt

**European Patent Office**

Office européen des brevets

(11) Publication number: **0 142 237**
**B1**

(12) **EUROPEAN PATENT SPECIFICATION**

(45) Date of publication of patent specification: **21.10.87**

(51) Int. Cl.⁴: **H 02 K 5/14, H 01 R 39/36**

(21) Application number: **84306140.9**

(22) Date of filing: **07.09.84**

(54) Components for electric motors.

(30) Priority: **09.09.83 GB 8324263**
**22.06.84 GB 8415951**

(43) Date of publication of application:
**22.05.85 Bulletin 85/21**

(45) Publication of the grant of the patent:
**21.10.87 Bulletin 87/43**

(84) Designated Contracting States:
**DE FR GB IT**

(56) References cited:
**DE-A-1 763 023**
**DE-A-3 147 418**
**FR-A- 648 055**
**FR-A-2 339 265**
**FR-A-2 437 723**
**US-A-3 482 135**
**US-A-4 293 789**

(73) Proprietor: **Black & Decker Inc.**
**Drummond Plaza Office Park**
**1423 Kirkwood Highway**
**Newark Delaware 19711 (US)**

(72) Inventor: **Sanders, Anthony Jonathan**
**Keep Cottage Mill Lane**
**Redworth Darlington Co. Durham (GB)**

(74) Representative: **Bardo, Julian Eason et al**
**Abel & Imray Northumberland House**
**303-306 High Holborn**
**London, WC1V 7LH (GB)**

Courier Press, Leamington Spa, England.

## Description

This invention relates to components for electric motors.

It is of course important that the electrical connections between the components of a motor are reliable and able to withstand the vibration to which they are inevitably exposed in use. In a conventional arrangement for making an electrical connection to a brush holder, the brush holder is provided with a tag over which a lead is clipped. Unless special precautions are taken, it is possible for the lead to become detached from the tag.

U.S. Patent Specification No. 4,293,789 describes an end cap assembly of a moulded plastics material for an electric motor. Brush boxes of metallic conductive material are located in recesses in the end cap and are secured in place by studs that extend from the end cap through apertures in tabs forming part of the brush boxes and are staked over. Electrical connections are made to the brush boxes by means of C-shaped clips of conductive material. Such an arrangement depends upon the clips for the maintenance of good electrical contact.

According to the present invention, a component for an electric motor comprises a plastics body, at least one brush box made of electrically conductive material mounted on the plastics body and containing a brush for making electrical contact with a commutator of the motor, and an electrical connector to which the brush box is connected characterised in that the brush box includes a base formed with lateral flanges in that the plastics body has grooves in which the lateral flanges locate and in that a part of the electrical connector is located beneath the base and is wrapped round the flanges to secure it to the brush box.

The lateral flanges may be integral with the brush box.

The or each brush box may be permanently secured to the plastics body by permanent deformation of the latter after installation of the brush box.

The or each brush box may have apertured flanges at its rear end, the apertured flanges being permanently secured to the plastics body by deformation of parts of the latter that extends through the apertures.

This arrangement of connecting the brush box to the electrical connector is able to provide a very sound electrical connection automatically on mechanical engagement of the components.

The connector may pass directly underneath and directly adjacent to the base of the bush box.

The arrangement of each brush box and the respective connector is preferably such that the respective electrical connector cannot be moved out of engagement with the brush box without moving the brush box. In this case, the electrical connection cannot be broken without the brush box first being removed.

The plastics body may be an end cap assembly.

By way of example certain embodiments of the invention will now be described with reference to the accompanying drawings, of which:

Fig. 1 is a sectional side view of a motor mounted in the body of a hedge trimmer,

Fig. 2 is a side view of an end cap assembly which is provided at the commutator end of the motor,

Fig. 3 is a plan view of the end cap assembly of Fig. 2,

Fig. 4 is a view in the direction of the arrow "B" in Fig. 2,

Fig. 5 is a sectional view along the lines A—A in Fig. 4 and

Fig. 6 is a sectional view along the lines C—C in Fig. 4.

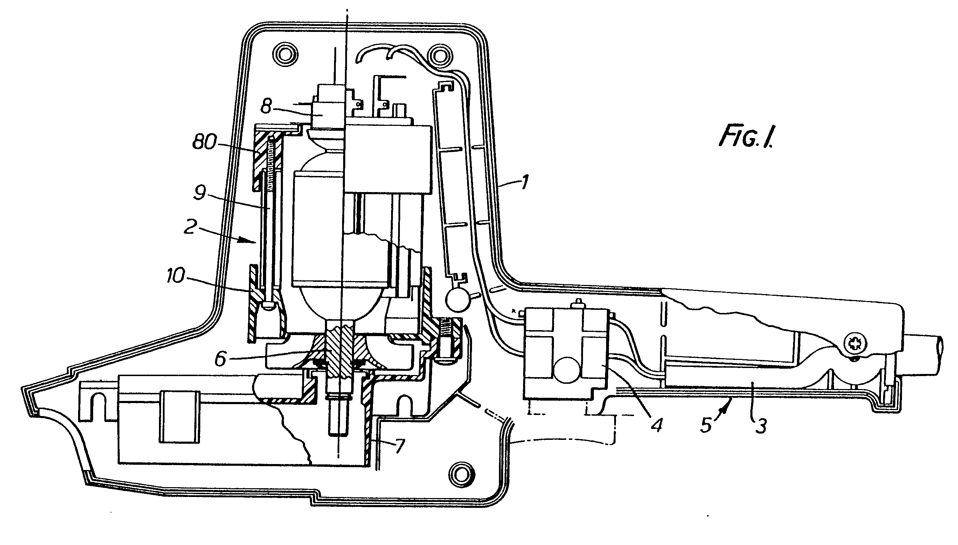

Referring first to Fig. 1, a hedge trimmer has an outer casing 1 of clam shell construction, a motor 2 connectible to a power supply by a cable 3 via a switch 4 in a handle 5. The motor has an armature shaft 6 which drives the blades (not shown) of the trimmer via gears (not shown) mounted in a gearbox housing 7.

The motor 2 has an armature on the armature shaft 6, a commutator 8, a stator assembly 9, an end cap 10 at the gearbox end and an end cap assembly 80 at the commutator end. The end cap 10, end cap assembly 80 and stator assembly 9 are bolted together and the end cap 10 and the gearbox housing 7 are also bolted together. The armature shaft is mounted for rotation at one end in a bearing of the end cap assembly 80 and at the other end in a bearing in the gearbox housing 7.

The present invention is concerned with the structure of the motor 2 and more particularly of the end cap assembly 80 and it should be understood that the invention may find a wide variety of applications in any case where an electric motor is to be employed. The description below is therefore concerned primarily with details of the motor 2 and in particular of the end cap assembly 80.

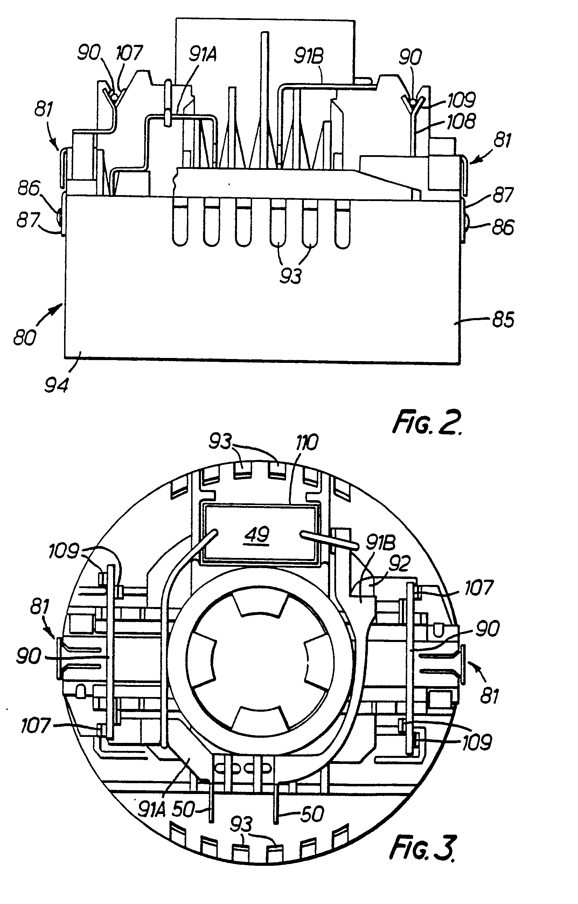

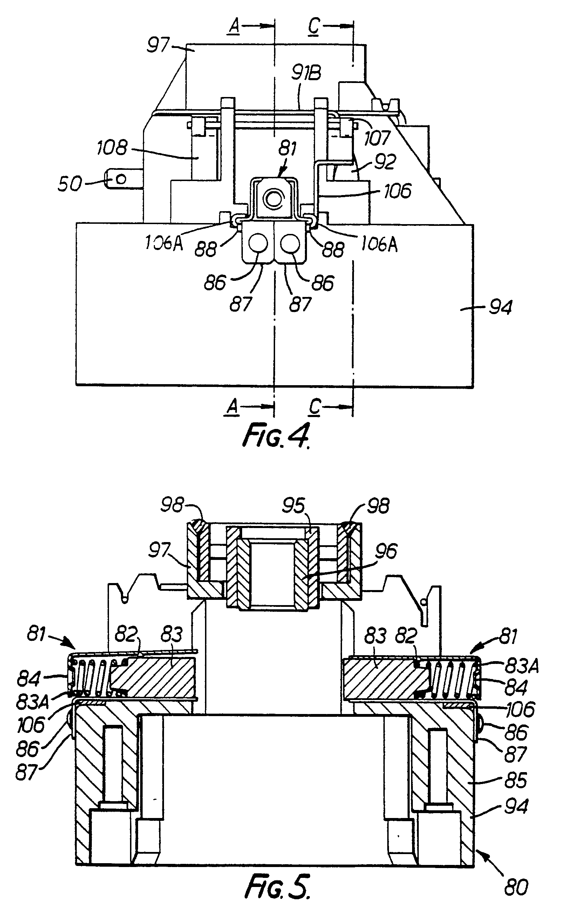

Referring now also to Figs. 2 to 6, the end cap assembly 80 comprises a plastics body 85, a bearing 96 (omitted for the sake of clarity from some views but shown in Fig. 5) in which the motor armature shaft is mounted, a pair of brush boxes 81 housing brushes 83 and various connectors for electrically connecting the brush boxes and field coils in a desired configuration to a power supply. The form of these connectors will be described in more detail below.

The plastics body 85 has a generally cylindrical cap part 94 which fits around the end of the stator assembly and has screw threaded bosses by which it is bolted to the stator assembly 9 and the end cap 10.

Each of the brush boxes 81 of the end cap assembly 80 has an inwardly protruding pip 82 (Fig. 5) in the wall of the brush box and this engages the brush 83 when it is first installed. The pip 82 presses against the brush 83 holding it in position against the bias of a spring 83A, thereby retaining it entirely within the brush box. The left hand side of Fig. 5 shows the brush 83 retained in this way. Once a rotor has been mounted in the assembly 80, the brush 83 is pushed towards the commutator by inserting a tool through a hole 84 in the rear end wall of the brush box. This moves the brush clear of the pip so that it is biased by the spring 83A into contact with a commutator of the rotor. The right hand side of Fig. 5 shows the brush 83 in its forward working position.

The base of each brush box 81 has lateral flanges 88 mounted in corresponding grooves in the plastics body 85 of the end cap assembly. As most easily seen in Fig. 5, at the rear of the brush box 81 a cavity is formed between the base of the box and the body 85 and an electrical strip connector 106 is located in this cavity prior to insertion of the box. Upon insertion of the box electrical connection is automatically established between the brush box and the connector 106 with portions 106A of the connector 106 wrapping around the lateral flanges 88 and thereby establishing a very sound connection. Furthermore, as best seen in Fig. 5, the connector is entirely surrounded by the brush box and the plastics body 85 of the end cap assembly and cannot therefore become detached unless the box is removed.

Each of the connectors 106 extends upwards from a respective brush box and terminates in a forked end 107. Separate strip connectors 108 are plugged into terminals connected to the field coils and these connectors similarly terminate in forked ends 109. In order to complete the electrical connection wires 90 are laid across between the forked ends 107 and 109 and soldered in position. Alternatively, if an inductance is required in the connection, a standard inductor may be connected between the forked ends.

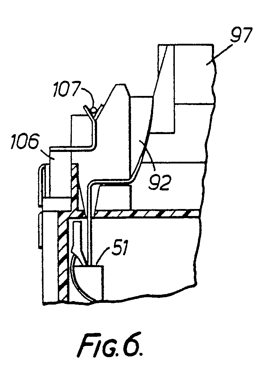

Strip connectors 91A and 91B are provided and at one end are plugged into terminals 51 connected to the field coils and at the other end provide terminals 50 for connection to the power supply. The connector 91B includes a twisted portion 92 (Figs. 3, 4 and 6) the end of which plugs into one of the terminals 51 of the field coils (Fig. 6).

The body 85 of the cap assembly is provided with a number of air vents 93 in its cap part 94.

To hold the brush boxes in position on the plastics body 85 of the end cap assembly, the rear end of each of the brush boxes 81 is formed with a pair of downturned flanges 87 having holes through which small bosses 86 formed on the body 85 of the assembly project. Once the brush boxes 81 are positioned on the body 85 the bosses 86 are hot staked so as to project over the flanges 87 and retain the boxes permanently on the body 85.

The end cap assembly 80 is mounted on the stator assembly and thereafter the connectors 106, 108, 91A and 91B are installed. The actual order of installing the connectors is as follows: first the connector 91A and then the connector 91B are installed; connectors 106 for the brush boxes are installed and thereafter the brush boxes are located. Thereafter the connectors 108 are installed, the wires 90 fitted and finally, if it is employed, a capacitor 49 (Fig. 3) is connected across the connectors 91A and 91B and housed in a recess 110.

It should be understood that this order of installation may be varied according to the specific requirements of any particular design.

The strip connectors 106, 108, 91A and 91B are relatively stiff members and therefore retain their shape during normal use.

The end cap assembly 80 is also described in the Specifications of our co-pending European Patent Applications Nos. 84.306138.3 (EP—A—139.450) and 84.306139.1 (EP—A—139.451) filed on the same date as this Application. Those Applications also include descriptions of other embodiments of components for electric motors.

**Claims**

1. A component for an electric motor, the component including a plastics body (80), at least one brush box (81) made of electrically conductive material mounted on the plastics body (80) and containing a brush (83) for making electrical contact with a commutator (8) of the motor, and an electrical connector (106) to which the brush box (81) is connected characterised in that the brush box (81) includes a base formed with lateral flanges (88) in that the plastics body (80) has grooves in which the lateral flanges (88) locate and in that a part of the electrical connector (106) is located beneath the base asnd is wrapped round the flanges (88) to secure it to the brush box (81).

2. A component as claimed in claim 1 characterised in that the or each brush box (81) has integral flanges (88).

3. A component as claimed in claim 1 or 2 in which the or each brush box (81) is permanently secured to the plastics body (80) by permanent deformation of the plastics body after installation of the brush box (81).

4. A component as claimed in claim 3 characterised in that the or each brush box (81) has apertured flanges (87) at its rear end that are permanently secured to the plastics body (80) by deformation of parts of the latter that extend through the apertures.

**Patentansprüche**

1. Bauteil für einen Elektromotor, daß einen Kunststoffkörper (80), mindestens ein auf den Kunststoffkörper (80) befestigtes und eine Bürste (83) zur Herstellung eines elektrischen Kontaktes mit einem Kommutator (8) des Motors enthaltendes Bürstengehäuse (81) aus elektrisch leitfähigem Material sowie einen elektrischen Verbinder (106) aufweist, mit dem das Bürstengehäuse (81) verbunden ist, dadurch gekennzeichnet, daß das Bürstengehäuse (81) eine Basis mit seitlichen Flanschen (88) aufweist, daß der Kunststoffkörper (80) Nuten hat, in denen sich die seitlichen Flansche (88) befinden, und daß ein Teil des elektrischen Verbinders (106) unterhalb der

0 142 237

Basis angeordnet und um die Flansche (88) gewickelt ist, um am Bürstengehäuse (81) befestigt zu sein.

2. Bauteil nach Anspruch 1, dadurch gekennzeichnet, daß das oder jedes Bürstengehäuse (81) einstückige Flansche (88) aufweist.

3. Bauteil nach Anspruch 1 oder 2, bei dem das oder jedes Bürstengehäuse (81) durch dauerhafte Verformung des Kunststoffkörpers nach Montage des Bürstengehäuses (81) dauerhaft am Kunststoffkörper (80) befestigt ist.

4. Bauteil nach Anspruch 3, dadurch gekennzeichnet, daß das oder jedes Bürstengehäuse (81) an seinem hinteren Ende gelochte Flansche (87) aufweist, die durch Verformung von Teilen des Kunststoffkörpers (80), die sich durch die Öffnungen erstrecken, dauerhaft befestigt sind.

**Revendications**

1. Composant pour un moteur électrique, le composant comprenant un corps (80) en matière plastique, au moins un porte-balai (81) fait d'une matière conductrice de l'électricité, monté sur le corps en matière plastique (80) et contenant un balai (83) destiné à entrer en contact électrique avec le collecteur (8) du moteur, et un connecteur électrique (106) auquel le porte-balai (81) est relié, caractérisé en ce que le porte-balai (81) comprend une base munie d'ailes latérales (88), en ce que le corps en matière plastique (80) présente des rainures dans lesquelles les ailes latérales (88) se logent, et en ce qu'une partie du connecteur électrique (106) est placée sous la base et est retournée autour des ailes (88) pour fixer ce connecteur au porte-balai (81).

2. Composant selon la revendication 1, caractérisé en ce que le porte-balai ou chaque porte-balai (81) présente des ailes (88) venues d'une seule pièce.

3. Composant selon la revendication 1 ou 2, dans lequel le porte-balai ou chaque porte-balai (81) est fixé de façon permanente au corps en matière plastique (80) par une déformation permanente du corps en matière plastique après le montage du porte-balai (81).

4. Composant selon la revendication 3, caractérisé en ce que le porte-balai ou chaque porte-balai (81) présente à son extrémité arrière des ailes (87) percées de trous, qui sont fixées de façon permanente au corps en matière plastique (80) par déformation de parties de ce corps qui traversent les trous.

FIG. 1.

0 142 237

*Fig. 2.*

*Fig. 3.*

**Fig. 4.**

**Fig. 5.**

FIG. 6.